(19) Europäisches Patentamt
European Patent Office
Office européen des brevets

(11) EP 2 221 903 B1

(12) # EUROPEAN PATENT SPECIFICATION

(45) Date of publication and mention of the grant of the patent:
**01.04.2015 Bulletin 2015/14**

(21) Application number: **10250272.1**

(22) Date of filing: **17.02.2010**

(51) Int Cl.:
***H01M 4/505*** (2010.01) ***H01M 4/525*** (2010.01)
***H01M 10/052*** (2010.01) ***H01M 4/485*** (2010.01)
***H01M 4/587*** (2010.01) ***C01G 51/00*** (2006.01)
***C01G 53/00*** (2006.01) ***H01M 4/38*** (2006.01)
***H01M 4/40*** (2006.01) ***H01M 4/62*** (2006.01)

(54) **Positive electrode for rechargeable lithium battery and rechargeable lithium battery including same**

Positive Elektrode für eine wiederaufladbare Lithiumbatterie und wiederaufladbare Lithiumbatterie damit

Électrode positive pour batterie au lithium rechargeable et batterie au lithium rechargeable la comprenant

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **19.02.2009 KR 20090013942**

(43) Date of publication of application:
**25.08.2010 Bulletin 2010/34**

(73) Proprietor: **Samsung SDI Co., Ltd.**
**Gyeonggi-do (KR)**

(72) Inventor: **Lim, Wan-Mook**
**Yongin-si**
**Gyeonggi-do (KR)**

(74) Representative: **Mounteney, Simon James et al**
**Marks & Clerk LLP**
**90 Long Acre**
**London**
**WC2E 9RA (GB)**

(56) References cited:
**WO-A1-2009/060603** **JP-A- 2006 107 845**
**US-A1- 2003 180 617** **US-A1- 2004 072 073**
**US-A1- 2008 299 457** **US-B1- 6 416 902**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 221 903 B1

## Description

BACKGROUND OF THE INVENTION

1. Field of the Invention

The present invention relates to a positive electrode for a rechargeable lithium battery and a rechargeable lithium battery including the same. More particularly, the present invention relates to a positive electrode for a rechargeable lithium battery having excellent safety and cycle life characteristics, and a rechargeable lithium battery including the positive electrode.

2. Description of the Related Art

Lithium rechargeable batteries have recently drawn attention as power sources for small portable electronic devices. The batteries use an organic electrolyte solution and thereby have twice the discharge voltage of a conventional battery that uses an alkali aqueous solution. Accordingly, lithium rechargeable batteries have high energy density.

For negative active materials of a rechargeable lithium battery, various carbon-based materials such as artificial graphite, natural graphite, and hard carbon, which can all intercalate and deintercalate lithium ions, that is, where lithium ions can be inserted into and removed from the carbon-based material, have been used. For positive active materials of a rechargeable lithium battery, composite metal oxides such as $LiCoO_2$, $LiMn_2O_4$ $LiNiO_2$, $LiNi_{1-x}Co_xO_2$ ($0<x<1$), $LiMnO_2$, and so on have been researched.

Of the positive active materials, a cobalt-based positive active material such as $LiCoO_2$ has good electric conductivity, a high battery voltage, and excellent electrode characteristics, and thus is presently the most popular material. However, it is relatively expensive. Manganese-based positive active materials such as $LiMn_2O_4$ and $LiMnO_2$ are the easiest to synthesize, are less costly than the other materials, and are environmentally friendly. However, these manganese-based materials have relatively low capacity. A nickel-based positive active material such as $LiNiO_2$ is currently the least costly of the positive active materials mentioned above and has a high discharge capacity. Therefore, it has been actively researched. In particular, when some of the Ni is substituted with Co and Mn, thermal stability may be improved. However, such a nickel-based positive active material becomes exothermic abruptly at around 300 °C, and has relatively lower safety, for example with respect to penetration of the battery, than cobalt-based positive active materials.

WO 2009/060603 discloses a positive electrode active material for a non-aqueous electrolyte secondary battery, which comprises a lithium-containing transition metal oxide having an oxygen cubic close-packed structure, wherein the lithium-containing transition metal oxide has a chemical composition represented by the formula $Li[Lip(Ni_xMn_yCo_z)_{1-p}]O_2$ wherein x, y and z represent the ratio among the elements nickel, manganese and cobalt, respectively; and x, y, z and p fulfill the requirements represented by the following formulae: 0.2+y=x=0.7, 0.15=y, 0.05=z, x+y+z=1 and 0=p=0.1.

US 6,416,902 discloses a non-aqueous lithium ion secondary battery that is composed of a positive electrode layer, a negative electrode layer, and a non-aqueous electrolyte. The positive electrode layer contains positive electrode active material of the formula $Li_xNi_{1-y}CO_{y-z}M_zO_{2-a}X_b$, wherein M is Mg, Ca, Ba, Ti, V, Cr, Mn, Fe, Co, Cu, Zn, Nb, Mo, Ag, Ta, W, B, Al, Ga, In, C, Si, Ge, Sn, or Pb; X is a halogen atom: $0.2<x<=1.2$, $0<y<=0.5$, $z<y$, $0<z<0.5$, $0<=a<=1.0$ and $0<=b<=2a$; and at least one of positive and negative electrode layers contains rubber binder.

US 2003/180617 discloses a nonaqueous electrolyte secondary battery includes a positive electrode comprising a positive electrode material attached to a positive electrode current collector, a negative electrode and a nonaqueous electrolyte, wherein the positive electrode material comprises a positive electrode active material represented by $Li_aMn_bNi_bCo_{1-2b}O_2$ (wherein a is $0\leq a\leq 1.1$, and b is $0<b\leq 0.5$), a binder and an electrically conductive agent, wherein the binder is contained in the positive electrode material in a range of 0.8-3 weight %, and the density of the positive electrode material is not less than 3.0 $g/cm^3$.

US 2004/072073 discloses a lithium ion secondary battery comprising a positive electrode, a negative electrode and a non-aqueous electrolyte, wherein the positive electrode comprises a positive electrode active material, a conductive agent and a binder, the positive electrode active material comprises a lithium-containing composite oxide represented by the formula $Li_a(Co_{1-x-y}Mg_xM_y)_bO_c$, where M is at least one selected from Ni and Al, $0\leq a\leq 1.05$, $0.03\leq x\leq 0.15$, $0\leq y\leq 0.25$, $0.85\leq b\leq 1.1$ and $1.8\leq c\leq 2.1$, and the amount of the conductive agent contained in the positive electrode is not more than 3.0 parts by weight per 100 parts by weight of the positive electrode active material.

US 2008/299457 discloses a nonaqueous electrolyte secondary battery including a positive electrode including a positive electrode current collector carrying a positive electrode material mixture layer thereon, a negative electrode including a negative electrode current collector carrying a negative electrode material mixture layer thereon, a separator provided between the positive electrode and the negative electrode and a nonaqueous electrolyte solution, wherein the positive electrode current collector is a conductive body containing aluminum and the positive electrode material mixture

layer includes a first material mixture layer and a second material mixture layer formed on the first material mixture layer. The first material mixture layer is made of a first material mixture containing a first organic material which is soluble or dispersible in water and the second material mixture layer is made of a second material mixture containing a second organic material which is soluble or dispersible in an organic solvent

JP 2006107845 discloses a cathode active material for the nonaqueous electrolyte secondary battery consisting of a lithium metal complex oxide expressed by the formula: $[Li]_{3a}[Ni_{1-x-y-z}Co_xMn_yL_z]_{3b}[O_2]_{6c}$ (here, suffixes following the [] denote sites), provided, z is an inclusion rate of Li into a 3b site obtained by a Rietveld analysis, satisfying $0 \leq x \leq 0.25-3z$, $0.15+2z \leq y \leq 0.35+2z$, $z \leq 0.05$, and that, an inclusion rate of a metal element other than Li into a 3a site is 0.05 or less, and a mol ratio 2w of Li in a lithium compound existing on the surface satisfies: $0<2w \leq 0.10$.

## SUMMARY OF THE INVENTION

The present invention seeks to provide a positive electrode for a rechargeable lithium battery having excellent cycle life and excellent safety when the battery is penetrated. The present invention also sets out to provide a rechargeable lithium battery including the positive electrode.

One embodiment of the present invention provides a positive electrode for a rechargeable lithium battery that includes a nickel-based positive active material, a binder, and a conductive material, wherein the binder is included in an amount of 120 to 160 parts by weight based on 100 parts by weight of the conductive material. Another embodiment of the present invention provides a rechargeable lithium battery that includes the above positive electrode, a negative electrode including a negative active material, and a non-aqueous electrolyte.

The above and other features of the invention are set out in the appended claims.

Additional aspects and/or advantages of the invention will be set forth in part in the description which follows and, in part, will be obvious from the description, or may be learned by practice of the invention.

## BRIEF DESCRIPTION OF THE DRAWINGS

Aspects and advantages of the invention will become apparent and more readily appreciated from the following description of the embodiments, taken in conjunction with the accompanying drawings of which:

FIG. 1 is a graph showing TGA results after separating a positive active material layer from the rechargeable lithium cell; and

FIG. 2 is a schematic view of a representative structure of a rechargeable lithium battery.

## DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

The positive electrode for a rechargeable lithium battery according to the present invention includes a nickel-based positive active material, a binder, and a conductive material. The binder is included in an amount of 140 to 160 parts by weight based on 100 parts by weight of the conductive material. When the binder is added in this concentration range it is possible to provide excellent resistance to the effects of battery penetration and excellent cycle life. The conductive material may be included in an amount of 1 to 3 wt % based on the total weight of the positive active material, binder, and conductive material.

As described above, one embodiment may improve safety such as resistance to the effects of battery penetration by adjusting the weight ratio of the binder and conductive material. In particular, the effects on improving resistance to the effects of battery penetration obtained by adjusting the weight ratio of the binder and conductive material are further increased by using a nickel-based positive active material, and particularly the compound represented by the following Chemical Formula 1. In comparison, a cobalt-based positive active material such as $LiCoO_2$ has excellent resistance to the effects of battery penetration, but when the binder is added in an excess amount with respect to the amount of conductive material, the cycle life characteristics decrease and the penetration resistance characteristics are not further improved.

[Formula 1] $Li_xMyO_{2-z}$

Herein, M is $M'_{1-k}A_k$, where M' is $Ni_{1-a-b}(Ni_{1/2}Mn_{1/2})_aCo_b$, $0.65 \leq a + b \leq 0.85$, and $0.1 \leq b \leq 0.4$,
A is a dopant,

$$0 \leq k < 0.05,$$

$$0.95 \leq x \leq 1.05,$$

$$x + y \fallingdotseq 2,$$

and

$$0 \leq z \leq 0.05.$$

A specific example of such a compound according to Formula 1 is $LiNi_{0.5}Co_{0.2}Mn_{0.3}O_2$.

In one embodiment, polyvinylidene fluoride may be preferable for a binder. The conductive material is included to improve electrode conductivity. Any electrically conductive material may be used as a conductive material unless it causes a chemical change. Examples of the conductive material include a carbon-based material such as natural graphite, artificial graphite, carbon black, acetylene black, ketjen black, or carbon fiber; a metal-based material such as a metal powder or a metal fiber including copper, nickel, aluminum, silver, and so on; a conductive polymer such as a polyphenylene derivative; and mixtures thereof.

The positive electrode may be fabricated as follows: a positive active material composition is prepared by mixing the active material, a binder, and a conductive agent, and then the composition is coated on a current collector. The method of manufacturing an electrode is well known in this art, so a detailed description thereof will be omitted. The solvent may include N-methylpyrrolidone, but it is not limited thereto. The current collector may be Al, but is not limited thereto.

Another embodiment of the present invention provides a rechargeable lithium battery including the positive electrode, a negative electrode including a negative active material, and a non-aqueous electrolyte. In the positive electrode, the binder is included at 120 to 160 parts by weight based on 100 parts by weight of the conductive material, which can be measured in accordance with thermogravimetric analysis (TGA) after fabricating a battery. Determination of the concentration of the binder through thermogravimetric analysis may be carried out with a general method known in the art.

The battery including a polyvinylidene fluoride binder may be measured as follows. First, the positive electrode is separated from the fabricated battery. In the positive electrode, the positive active material layer is separated from the current collector, washed with a solvent such as dimethyl carbonate, and dried, and then the weight change is monitored while increasing the temperature at a rate of about 10 °C/minute.

The measured values of temperature loss are shown as the light line with the scale on the left on the graph of FIG. 1. The derivative of the weight loss rate is shown as the dark line with the scale on the right on the graph of FIG. 1. There are two peaks in the derivative curve with a valley or boundary at approximately 40 minutes (that is, at 400 °C). The weight decline from the starting point of increasing the temperature to about 40 minutes indicates a weight ratio (2.057% in FIG. 1) of binder to the total weight of positive active material, conductive material, and binder, and the weight decline of the second peak (after 40 minutes) indicates a weight ratio (2.743% in FIG. 1) of conductive material.

The negative electrode includes a current collector and a negative active material layer disposed thereon, and the negative active material layer includes a negative active material. The negative active material includes a material that is capable of reversibly intercalating/deintercalating lithium ions, in particular, lithium metal, a lithium metal alloy, a material capable of being doped with lithium, or a transition metal oxide.

Materials that are capable of reversibly intercalating/deintercalating lithium ions include carbon materials. The carbon materials may be any generally-used carbon-based negative active material for a lithium ion rechargeable battery. Examples of the carbon material include crystalline carbon, amorphous carbon, and a mixture thereof. The crystalline carbon may be non-shaped, or sheet, flake, spherical, or fiber shaped natural graphite or artificial graphite. The amorphous carbon may be a soft carbon (carbon obtained by sintering at a low temperature), a hard carbon (carbon obtained by sintering at a high temperature), mesophase pitch carbide, fired coke, and so on.

Examples of a lithium metal alloy include lithium with a metal selected from the group consisting of Na, K, Rb, Cs, Fr, Be, Mg, Ca, Sr, Si, Sb, Pb, In, Zn, Ba, Ra, Ge, Al, and Sn. Examples of a material capable of being doped with lithium include Si, $SiO_x$ ($0 < x < 2$), an Si-Q alloy (where Q is an element selected from the group consisting of an alkali metal, an alkaline-earth metal, a IUPAC group 13 element (American Group IIIA), a group 14 element (Group IVA), a transition element, a rare earth element, and combinations thereof, and is not Si), Sn, $SnO_2$, an Sn-R alloy (where R is

an element selected from the group consisting of an alkali metal, an alkaline-earth metal, a group 13 element, a group 14 element, a transition element, a rare earth element, and combinations thereof, and is not Sn), and mixtures thereof. At least one of these materials may be mixed with $SiO_2$. The elements Q and R can be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, and combinations thereof. Examples of the transition metal oxide include vanadium oxide, lithium vanadium oxide, and the like.

The negative active material layer includes a binder, and optionally a conductive material. Even when the binder and the conductive material included in the negative active material layer have the same ratio as in the positive electrode according to the previous embodiment, it may not improve cycle life characteristics and increase the capacity, so they can be adjusted in an appropriate ratio.

The binder improves binding properties of the negative active material particles to each other and to a current collector. Examples of the binder include at least one polymer selected from the group consisting of polyvinyl alcohol, carboxymethyl cellulose, hydroxypropyl cellulose, polyvinyl chloride, carboxylated poly(vinyl chloride), polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is included to improve electrode conductivity. As with the positive electrode, any electrically conductive material may be used as a conductive material for the negative electrode unless it causes a chemical change. Examples of the conductive material include a carbon-based material such as natural graphite, artificial graphite, carbon black, acetylene black, ketjen black, or carbon fiber; a metal-based material such as a metal powder or a metal fiber including copper, nickel, aluminum, silver, and so on; a conductive polymer such as a polyphenylene derivative; and mixtures thereof. The current collector may be selected from the group consisting of a copper foil, a nickel foil, a stainless steel foil, a titanium foil, a nickel foam, a copper foam, a polymer substrate coated with a conductive metal, and combinations thereof.

The negative electrode may be fabricated by a method including mixing the active material, the conductive material, and the binder to provide a negative active material composition, and coating the composition on a current collector. The electrode manufacturing method is well known, and thus is not described in detail in the present specification. The solvent can be N-methylpyrrolidone, but it is not limited thereto.

The non-aqueous electrolyte includes a non-aqueous organic solvent and a lithium salt. The non-aqueous organic solvent acts as a medium for transmitting ions taking part in the electrochemical reaction of the battery.

The non-aqueous organic solvent may include a carbonate-based, ester-based, ether-based, ketone-based, alcohol-based, or aprotic solvent. Examples of the carbonate-based solvent may include dimethyl carbonate (DMC), diethyl carbonate (DEC), dipropyl carbonate (DPC), methylpropyl carbonate (MPC), ethyl propyl carbonate (EPC), ethyl methyl carbonate (EMC), ethylene carbonate (EC), propylene carbonate (PC), butylene carbonate (BC), and so on. Examples of the ester-based solvent may include methyl acetate, ethyl acetate, n-propyl acetate, dimethylacetate, methylpropionate, ethyl propionate, γ-butyrolactone, 5-decanolide, γ-valerolactone, d,l-mevalonolactone, γ-caprolactone, ε -caprolactone and so on. Examples of the ether-based solvent include dibutyl ether, tetraglyme, diglyme, 1,2-dimethoxyethane, 2-methyltetrahydrofuran, tetrahydrofuran, and so on, and examples of the ketone-based solvent include cyclohexanone, and so on. Examples of the alcohol-based solvent include ethyl alcohol, isopropyl alcohol, and so on, and examples of the aprotic solvent include nitriles such as R-CN (wherein R is a C2 to C20 linear, branched, or cyclic hydrocarbon, a double bond, an aromatic ring, or an ether bond), amides such as dimethyl formamide, dioxolanes such as 1,3-dioxolane, sulfolane, and so on.

The non-aqueous organic solvent may be used singularly or in a mixture. When the organic solvent is used in a mixture, the mixture ratio can be controlled in accordance with the desired battery performance.

The carbonate-based solvent may include a mixture of a cyclic carbonate and a linear carbonate. The cyclic carbonate and the chain carbonate are mixed together in the volume ratio of 1:1 to 1:9, and when the mixture is used as an electrolyte, the electrolyte performance may be enhanced.

In addition, the electrolyte of embodiments of the present invention may further include mixtures of carbonate-based solvents and aromatic hydrocarbon-based solvents. The carbonate-based solvents and the aromatic hydrocarbon-based solvents are preferably mixed together in the volume ratio of 1:1 to 30:1.

The aromatic hydrocarbon-based organic solvent may be represented by the following Formula 2.

[Formula 2]

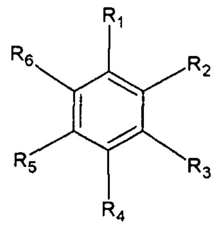

Herein, R1 to R6 are independently hydrogen, a halogen, a C1 to C10 alkyl, a C1 to C10 haloalkyl, or combinations thereof. The aromatic hydrocarbon-based organic solvent may include, but is not limited to, at least one selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or combinations thereof.

The non-aqueous electrolyte may further include vinylene carbonate or an ethylene carbonate-based compound of the following Formula 3.

[Formula 3]

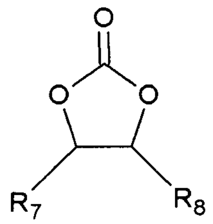

Herein, R7 and R8 are independently hydrogen, a halogen, a cyano group (CN), a nitro group ($NO_2$), and a C1 to C5 fluoroalkyl group, provided that at least one of R7 and R8 is a halogen, a nitro group ($NO_2$), or a C1 to C5 fluoroalkyl group and R7 and R8 are not simultaneously hydrogen.

The ethylene carbonate-based compound includes difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive used for improving cycle life may be adjusted within an appropriate range.

The lithium salt supplies lithium ions in the battery, performs the basic operation of a rechargeable lithium battery and improves lithium ion transport between the positive and negative electrodes. Non-limiting examples of the lithium salt include at least one supporting salt selected from $LiPF_6$, $LiBF_4$, $LiSbF_6$, $LiAsF_6$, $LiN(SO_2C_2F_5)_2$, $Li(CF_3SO_2)_2N$, $LiN(SO_2C_2F_5)_2$, $LiC_4F_9SO_3$, $LiClO_4$, $LiAlO_2$, $LiAlCl_4$, $LiN(C_xF2_{x+1}SO_2)(C_yF2_{y+1}SO_2)$, (where x and y are natural numbers), LiCl, LiI, and $LiB(C_2O_4)_2$ (lithium bisoxalate borate, LiBOB). The lithium salt may be used at a 0.1 through 2.0 M concentration. When the lithium salt is included at the above concentration range, electrolyte performance and lithium ion mobility may be enhanced due to optimal electrolyte conductivity and viscosity.

The rechargeable lithium battery may further include a separator between a negative electrode and a positive electrode, as needed. Non-limiting examples of suitable separator materials include polyethylene, polypropylene, and polyvinylidene fluoride; and multi-layers thereof such as a polyethylene/polypropylene double-layered separator, a polyethylene/polypropylene/polyethylene triple-layered separator, and a polypropylene/polyethylene/polypropylene triple-layered separator.

Rechargeable lithium batteries may be classified as lithium ion batteries, lithium ion polymer batteries, and lithium polymer batteries according to the presence of a separator and the kind of electrolyte used in the battery. The rechargeable lithium batteries may have a variety of shapes and sizes, and include cylindrical, prismatic, or coin-type batteries, and may be thin film batteries or may be rather large in size or bulky in shape. Structures and fabricating methods for lithium ion batteries pertaining to these aspects of the present invention are well known in the art.

FIG. 2 is a schematic view of a representative structure of a rechargeable lithium battery. FIG. 2 illustrates a rechargeable lithium battery 100, which includes a negative electrode 112, a positive electrode 114, a separator 113 interposed between the negative electrode 112 and the positive electrode 114, a flame retardant electrolyte solution (not shown) impregnating the separator 113, a battery case 120, and a sealing member 140 sealing the battery case 120. The negative electrode 112, positive electrode 114, and separator 113 are sequentially stacked, spirally wound, and placed in a battery case 120 to fabricate such a rechargeable lithium battery 100.

The following examples illustrate embodiments of the present invention in more detail. These examples, however, should not in any sense be interpreted as limiting the scope of the present invention.

(Reference Examples 1 and 4; and Examples 2, 3, 5 and 6)

A positive active material of $LiNi_{0.5}Co_{0.2}Mn_{0.3}O_2$ a binder of polyvinylidene fluoride, and a conductive material of carbon black were mixed in an N-methylpyrrolidone solvent in a composition shown in the following Table 1 to provide a positive active material slurry. The positive active material slurry was coated on an Al-foil current collector to provide a positive electrode in accordance with the general process of manufacturing an electrode in which a positive active material layer is formed on a current collector.

A negative active material of artificial graphite, a binder of polyvinylidene fluoride, and a conductive material of carbon black were mixed in an N-methylpyrrolidone solvent in a weight ratio of 94:3:3 wt % to provide a negative active material slurry. The negative active material slurry was coated on a Cu-foil current collector to provide a negative electrode in accordance with the general process of fabricating an electrode.

With the positive electrode, the negative electrode, and a non-aqueous electrolyte, a lithium rechargeable cell was fabricated in accordance with a general process. The non-aqueous electrolyte was prepared by adding fluoroethylene carbonate in a mixed solvent (2:2:6 volume ratio) of ethyl carbonate:ethyl methyl carbonate:dimethyl carbonate in which 1.3 M of $LiPF_6$ (a lithium salt concentration) was dissolved. The fluoroethylene carbonate was added at 5 parts by weight based on 100 parts by weight of the mixed solvent.

(Comparative Examples 1 to 4)

A positive active material of $LiCoO_2$, a binder of polyvinylidene fluoride, and a conductive material of carbon black were mixed in an N-methylpyrrolidone solvent in a composition shown in the following Table 1 to provide a positive active material slurry. The positive active material slurry was coated on an Al-foil current collector to provide a positive electrode in accordance with the general process of fabricating an electrode in which a positive active material layer is formed on a current collector.

A negative active material of artificial graphite, a binder of polyvinylidene fluoride, and a conductive material of carbon black were mixed in an N-methylpyrrolidone solvent in a weight ratio of 94:3:3 wt % to provide a negative active material slurry. The negative active material slurry was coated on a Cu-foil current collector to provide a negative electrode in accordance with the general process of fabricating an electrode.

With the positive electrode, the negative electrode, and a non-aqueous electrolyte, a rechargeable lithium cell was fabricated in accordance with the general process. The non-aqueous electrolyte was prepared by adding fluoroethylene carbonate in a mixed solvent (2:2:6 volume ratio) of ethyl carbonate:ethyl methyl carbonate:dimethyl carbonate in which 1.3 M of $LiPF_6$ (a lithium salt concentration) was dissolved. The fluoroethylene carbonate was added at 5 parts by weight based on 100 parts by weight of the mixed solvent.

(Comparative Example 5 to 8)

A rechargeable lithium cell was fabricated in accordance with the same procedure as in Comparative Example 1, except that the positive active material was the compound $LiNi_{0.5}Co_{0.2}Mn_{0.3}O_2$.

Penetration Test

The rechargeable lithium cells obtained from Ref Examples 1 and 4, Examples 2, 3, 5 and 6 and Comparative Examples 1 to 8 were subjected to a penetration test, and the results are shown in the following Table 1. The penetration test was performed under two conditions, and each condition is as follows.

The penetration test 1) was carried out on five lithium rechargeable cells obtained from each of Ref Examples 1 and 4, Examples 2, 3, 5 and 6 and each of Comparative Examples 1 to 8, charging the rechargeable lithium cells at 0.5 C to 4.2 V for 3 hours; pausing the charging for about 10 minutes (and up to 72 hours); and completely perforating the central cell part with a pin having a diameter of 5 mm at a speed of 60 mm/sec.

The penetration test 2) was carried out on five lithium rechargeable cells obtained from each of Ref Examples

1 and 4, Examples 2, 3, 5 and 6 and each of Comparative Examples 1 to 8; charging the rechargeable lithium cells at 0.5 C to 4.3 V for 3 hours; pausing the charging for about 10 minutes (and up to 72 hours); and completely perforating the central cell part with a pin having a diameter of 5 mm at a speed of 60 mm/sec.

In the following Table 1, LX (X is 0-5) indicates battery stability, wherein the battery is more stable as the X value is lower. In other words, the meaning of the results depending upon the X value are as follows:

L0: no change, L1: leaked, L2: flamed, L3: fumed at 200 ° C or less, L4: fumed at 200 °C or more, L5: exploded

In addition, the number before L indicates the number of cells. For example, 2L1, 3L4 means that two cells showed L1 results and three cells showed L4 results among five cells. In addition, since the penetration test could not result in L0, the best result in terms of stability would be L1.

Cycle Life Characteristics

Each lithium rechargeable cell according to Ref Examples 1 and 4, Examples 2 and 3 and Comparative Examples 1 to 6 was measured to determine cycle life characteristics, and the results are shown in the following Table 1. The cycle life characteristics were determined by carrying out the charge and discharge at 25 ° C at 1C for 100 cycles, and the results are shown as a ratio of discharge capacity at 100 cycles with respect to that at the first cycle. In the following Table 1, LCO stands for $LiCoO_2$, and NCM stands for $LiNi_{0.5}Co_{0.2}Mn_{0.3}O_2$. In the table below R = Reference.

Table 1

| | Positive active material | Content of positive active material (wt %) | Conductive material (wt %) | Binder (wt %) | Penetration result 1) | Penetration result 2) | Cycle life characteristics (%) |
|---|---|---|---|---|---|---|---|
| Comparative Example 1 | LCO | 95 | 3 | 2 | 5L1 | 5L1 | 94 |
| Comparative Example 2 | LCO | 94 | 3 | 3 | 5L1 | 5L1 | 91 |
| Comparative Example 3 | LCO | 93 | 3 | 4 | 5L1 | 5L1 | 90 |
| Comparative Example 4 | LCO | 92 | 3 | 5 | 5L1 | 5L1 | 81 |
| Comparative Example 5 | NCM | 93.7 | 3 | 3.3 | 2L1, 3L4 | 5L4 | 93 |
| Comparative Example 6 | NCM | 91.9 | 3 | 5.1 | 5L1 | 5L1 | 81 |
| Comparative Example 7 | NCM | 97.9 | 1 | 1.1 | 1L1, 4L4 | 5L4 | 92 |
| Comparative Example 8 | NCM | 97.3 | 1 | 1.7 | 5L1 | 5L1 | 79 |
| R Example 1 | NCM | 93.4 | 3 | 3.6 | 5L1 | 2L1, 3L4 | 92 |
| Example 2 | NCM | 92.2 | 3 | 4.8 | 5L1 | 5L1 | 91 |
| Example 3 | NCM | 92.8 | 3 | 4.2 | 5L1 | 5L1 | 91 |
| R Example 4 | NCM | 97.8 | 1 | 1.2 | 5L1 | 1L1, 4L4 | 93 |
| Example 5 | NCM | 97.4 | 1 | 1.6 | 5L1 | 5L1 | 91 |
| Example 6 | NCM | 97.6 | 1 | 1.4 | 5L1 | 5L1 | 92 |

As shown in Table 1, the rechargeable cells according to Comparative Examples 1 to 4 including the positive active material of $LiCoO_2$ show excellent resistance to the effects of penetration even though the binder is added at an equal or smaller amount than the amount of conductive material, or it is added at 170 parts by weight based on 100

parts by weight of conductive material. In other words, when the positive active material included $LiCoO_2$, the resistance to the effects of penetration had no relationship to the weight ratio of binder and conductive material, and the cycle life characteristics were poorer in the rechargeable cell according to Comparative Example 4 that included an excessive amount of binder.

Also, the resistance to the effects of penetration were poorer in rechargeable cells according to Comparative Examples 5 and 7 in which the positive active material was NCM, and a binder was added at a small amount such as 110 parts by weight based on 100 parts by weight of conductive material. This is because the sudden current flow due to the short-circuit generated in the perforated part during the penetration test generate Joule's heat in which the local temperature rapidly increased, and thereby, the temperature increased over the critical point, causing thermal runaway.

In addition, the rechargeable cells according to Comparative Examples 6 and 8 in which the positive active material was NCM and the binder was added at 170 parts by weight based on 100 parts by weight of conductive material, wherein the binder was added at an excessively high amount relative to the amount of conductive material, had excellent resistance to the effects of penetration, but they had poorer cycle life characteristics.

On this point, the rechargeable cells according to Reference Examples 1 abd 4 and Examples 2, 3, 5 and 6, in which the positive active material was NCM and the binder was added at 120 to 160 parts by weight based on 100 parts by weight of conductive material, had both excellent resistance to the effects of penetration and excellent cycle life characteristics. From the results, it is understood that the resistance to the effects of penetration may be improved while cycle life characteristics do not deteriorate from adding the binder at 120 to 160 parts by weight based on 100 parts by weight of conductive material. In particular, all rechargeable cells according to Examples 2, 3, 5, and 6, in which the positive active material was NCM and the binder was added at 140 parts by weight to 160 parts by weight based on 100 parts by weight of conductive material showed, 5L1 results, which is a measure of excellent stability.

## Claims

1. A positive electrode of a rechargeable lithium battery, comprising:

   a nickel-based positive active material;
   a binder; and
   a conductive material,
   wherein the binder is included in an amount of 140 to 160 parts by weight based on 100 parts by weight of the conductive material, and
   wherein the positive active material is represented by the following Formula 1:

   [Formula 9] $Li_xMyO_{2-z}$

   wherein M is $M'_{1-k}A_k$, M' is $Ni_{1-a-b}(Ni_{1/2}Mn_{1/2})_aCo_b$, $0.65 \leq a + b \leq 0.85$, and $0.1 \leq b \leq 0.4$,
   A is a dopant,

   $$0 \leq k < 0.05,$$

   $$0.95 \leq x \leq 1.05,$$

   $$x + y \approx 2,$$

   and

   $$0 \leq z \leq 0.05.$$

2. A positive electrode according to claim 1, wherein the conductive material is included in an amount of 1 to 3 wt % based on the sum weight of the positive active material, conductive material, and binder.

3. A positive electrode according to claim 1 or 2, wherein the binder comprises polyvinylidene fluoride.

**4.** A positive electrode according to any one of claims 1 to 3, wherein the conductive material comprises one material selected from the group consisting of a carbon-based material, a metal-based material, a conductive polymer, and mixtures thereof.

**5.** A positive electrode according to claim 4, wherein:

the carbon-based material is selected from the group consisting of natural graphite, artificial graphite, carbon black, acetylene black, ketjen black and carbon fiber,
the metal-based material is a metal powder or fiber selected from the group consisting of copper, nickel, aluminum and silver, and
the conductive polymer is a polyphenylene derivative.

**6.** A rechargeable lithium battery comprising:

a negative electrode;
a non-aqueous electrolyte; and
a positive electrode according to any one of Claims 1 to 4.

**7.** A rechargeable lithium battery according claim 6, wherein the negative active material further comprises:

a metal, alloy or oxide selected from the group consisting of lithium metal, a lithium metal alloy, a material doped with lithium and a transition metal oxide;
a carbon material is selected from the group consisting of crystalline carbon, amorphous carbon and a mixture thereof;
a negative active material binder; and
a negative active material conductive material.

**8.** A rechargeable lithium battery according to claim 7, wherein
the lithium metal alloy includes lithium combined with a metal selected from the group consisting of Na, K, Rb, Cs, Be, Mg, Ca, Sr, Si, Sb, Pb, In, Zn, Ba, Ge, Al, and Sn,
the material doped with lithium is selected from the group consisting of a metal, compound or alloy of silicon Si and a metal, compound or alloy of tin Sn,
the compound, metal or alloy of Si is selected from the group consisting of Si, $SiO_x$ where $0 < x < 2$, an Si-Q alloy, where Q is an element selected from the group consisting of an alkali metal, an alkaline-earth metal, a IUPAC group 13 element a group 14 element (Group IVA), a transition element, a rare earth element, and combinations thereof,
the metal, compound or alloy of Sn is selected from the group consisting of Sn, $SnO_2$, an Sn-R alloy where R is an element selected from the group consisting of an alkali metal, an alkaline-earth metal, a group 13 element, a group 14 element, a transition element, a rare earth element, and combinations thereof,
Q and R are elements selected from the group consisting of Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Ti, Ge, P, As, Sb, Bi, S, Se, Te, and combinations thereof, and
the transition metal oxide is selected from the group consisting of vanadium oxide and lithium vanadium oxide.

**9.** A rechargeable battery according to claim 7 or 8, wherein the negative active material binder is at least one polymer selected from the group consisting of polyvinyl alcohol, carboxymethyl cellulose, hydroxypropyl cellulose, polyvinyl chloride, carboxylated poly(vinyl chloride), polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, and nylon, and
the negative active material conductive material is one material selected from the group consisting of a carbon-based material, a metal-based material, a conductive polymer, and mixtures thereof.

**10.** A rechargeable lithium battery according to any one of claims 6 to 9, wherein the non-aqueous electrolyte further comprises a non-aqueous organic solvent and a lithium salt.

**11.** A rechargeable lithium battery according to claim 10, wherein the lithium salt is selected from the group consisting of $LiPF_6$, $LiBF_4$, $LiSbF_6$, $LiAsF_6$, $LiN(SO_2C_2F_6)_2$, $Li(CF_3SO_2)_2N$, $LiN(SO_2C_2F_5)_2$, $LiC_4F_5SO_3$, $LiClO_4$, $LiAlO_2$. $LiAlCl_4$, $LiN(C_xF2_{x+1}SO_2)(C_yF2_{y+1}SO_2)$, where x and y are natural numbers, LiCl, LiI, and $LiB(C_2O_4)_2$ lithium bisoxalate borate, LiBOB.

**12.** A rechargeable lithium battery according claim 10 or 11, wherein the concentration range of the lithium salt is 0.1 M through 2.0 M.

## Patentansprüche

**1.** Positive Elektrode einer wiederaufladbaren Lithiumbatterie, umfassend:

ein positives Aktivmaterial auf Nickelbasis;
ein Bindemittel; und
ein leitfähiges Material,
wobei das Bindemittel in einer Menge von 140 bis 160 Gewichtsteilen, basierend auf 100 Gewichtsteilen des leitfähigen Materials, enthalten ist, und
wobei das positive Aktivmaterial durch die folgende Formel 1 dargestellt ist:

[Formel 1] $Li_xMyO_{2-z}$

wobei M $M'_{1-k}A_k$ ist, M' $Ni_{1-a-b}(Ni_{1/2}Mn_{1/2})_aCO_b$ ist, $0,65 \leq a+b \leq 0,85$ und $0,1 \leq b \leq 0,4$,
A ein Dotierungsmaterial ist,

$$0 \leq k \leq 0{,}05,$$

$$0{,}95 \leq x \leq 1{,}05,$$

$$x + y \approx 2$$

und

$$0 \leq z \leq 0{,}05.$$

**2.** Positive Elektrode nach Anspruch 1, wobei das leitfähige Material in einer Menge von 1 bis 3 Gew.-%, basierend auf der Summe der Gewichte des positiven Aktivmaterials, des leitfähigen Materials und des Bindemittels, enthalten ist.

**3.** Positive Elektrode nach Anspruch 1 oder 2, wobei das Bindemittel Polyvinylidenfluorid umfasst.

**4.** Positive Elektrode nach einem der Ansprüche 1 bis 3, wobei das leitfähige Material ein Material umfasst, das aus der Gruppe bestehend aus einem Material auf Kohlenstoffbasis, einem Material auf Metallbasis, einem leitfähigen Polymer und Gemischen derselben ausgewählt ist.

**5.** Positive Elektrode nach Anspruch 4, wobei:

das Material auf Kohlenstoffbasis aus der Gruppe bestehend aus natürlichem Graphit, künstlichem Graphit, Ruß, Acetylenschwarz, Ketjenblack und Kohlenstofffaser ausgewählt ist,
das Material auf Metallbasis ein Metallpulver oder eine Metallfaser ist, die aus der Gruppe bestehend aus Kupfer, Nickel, Aluminium und Silber ausgewählt ist, und
das leitfähige Polymer ein Polyphenylenderivat ist.

**6.** Wiederaufladbare Lithiumbatterie, umfassend:

eine negative Elektrode;
einen nicht wässrigen Elektrolyten; und

eine positive Elektrode nach einem der Ansprüche 1 bis 4.

**7.** Wiederaufladbare Lithiumbatterie nach Anspruch 6, wobei das negative Aktivmaterial weiterhin umfasst:

ein Metall, eine Legierung oder ein Oxid, das/die aus der Gruppe bestehend aus Lithiummetall, einer Lithiummetalllegierung, einem mit Lithium dotierten Material und einem Übergangsmetalloxid ausgewählt ist;
ein Kohlenstoffmaterial, das aus der Gruppe bestehend aus kristallinem Kohlenstoff, amorphem Kohlenstoff und einem Gemisch derselben ausgewählt ist;
ein dem negativen Aktivmaterial zugehöriges Bindemittel; und
ein dem negativen Aktivmaterial zugehöriges leitfähiges Material.

**8.** Wiederaufladbare Lithiumbatterie nach Anspruch 7, wobei:

die Lithiummetalllegierung Lithium umfasst, das mit einem Metall, ausgewählt aus der Gruppe bestehend aus Na, K, Rb, Cs, Be, Mg, Ca, Sr, Si, Sb, Pb, In, Zn, Ba, Ge, Al und Sn, kombiniert ist,
das mit Lithium dotierte Material aus der Gruppe bestehend aus einem Metall, einer Verbindung oder einer Legierung von Silicium Si und einem Metall, einer Verbindung oder einer Legierung von Zinn Sn ausgewählt ist,
die Verbindung, das Metall oder die Legierung von Si ausgewählt ist aus der Gruppe bestehend aus Si, $SiO_x$, wobei $0 < x < 2$, einer Si-Q-Legierung, wobei Q ein Element ist, das aus der Gruppe bestehend aus einem Alkalimetall, einem Erdalkalimetall, einem Element der IUPAC-Gruppe 13, einem Element der Gruppe 14 (Gruppe IVA), einem Übergangsmetall, einem Seltenerdmetall und Kombinationen derselben ausgewählt ist,
das Metall, die Verbindung oder die Legierung von Sn ausgewählt ist aus der Gruppe bestehend aus Sn, $SnO_2$, einer Sn-R-Legierung, wobei R ein Element ist, das aus der Gruppe bestehend aus einem Alkalimetall, einem Erdalkalimetall, einem Element der Gruppe 13, einem Element der Gruppe 14, einem Übergangsmetall, einem Seltenerdmetall und Kombinationen derselben ausgewählt ist,
Q und R Elemente sind, die aus der Gruppe bestehend aus Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Ti, Ge, P, As, Sb, Bi, S, Se, Te und Kombinationen derselben ausgewählt sind, und
das Übergangsmetalloxid aus der Gruppe bestehend aus Vanadiumoxid und Lithiumvanadiumoxid ausgewählt ist.

**9.** Wiederaufladbare Batterie nach Anspruch 7 oder 8, wobei das dem negativen Aktivmaterial zugehörige Bindemittel wenigstens ein Polymer, ausgewählt aus der Gruppe bestehend aus Polyvinylalkohol, Carboxymethylcellulose, Hydroxypropylcellulose, Polyvinylchlorid, carboxyliertem Poly(vinylchlorid), Polyvinylfluorid, einem Ethylenoxid enthaltenden Polymer, Polyvinylpyrrolidon, Polyurethan, Polytetrafluorethylen, Polyvinylidenfluorid, Polyethylen, Polypropylen, einem Styrol-Butadien-Kautschuk, einem Acryl-Styrol-Butadien-Kautschuk, einem Epoxidharz und Nylon, ist und
das dem negativen Aktivmaterial zugehörige leitfähige Material ein Material ist, das aus der Gruppe bestehend aus einem Material auf Kohlenstoffbasis, einem Material auf Metallbasis, einem leitfähigen Polymer und Gemischen derselben ausgewählt ist.

**10.** Wiederaufladbare Lithiumbatterie nach einem der Ansprüche 6 bis 9, wobei der nicht wässrige Elektrolyt weiterhin ein nicht wässriges organisches Lösungsmittel und ein Lithiumsalz umfasst.

**11.** Wiederaufladbare Lithiumbatterie nach Anspruch 10, wobei das Lithiumsalz ausgewählt ist aus der Gruppe bestehend aus $LiPF_6$, $LiBF_4$, $LiSbF_6$, $LiAsF_6$, $LiN(SO_2C_2F_5)_2$, $Li(CF_3SO_2)_2N$, $LiN(SO_2C_2F_5)_2$, $LiC_4F_9SO_3$, $LiClO_4$, $LiAlO_2$, $LiAlCl_4$, $LiN(C_xF2_{x+1}SO_2)(C_yF2_{y+1}SO_2)$, wobei x und y natürliche Zahlen sind, LiCl, LiI und $LiB(C_2O_4)_2$, Lithiumbisoxalatborat, LiBOB.

**12.** Wiederaufladbare Lithiumbatterie nach Anspruch 10 oder 11, wobei der Konzentrationsbereich des Lithiumsalzes 0,1 M bis 2,0 M beträgt.

**Revendications**

**1.** Electrode positive d’une batterie au lithium rechargeable, comprenant :

une matière active positive à base de nickel ;

un liant ; et
une matière conductrice,
dans laquelle le liant est incorporé en une quantité de 140 à 160 parties en poids sur la base de 100 parties en poids de la matière conductrice, et
dans laquelle la matière active positive est représentée par la formule 1 suivante :

[Formule 1] $Li_xM_yO_{2-z}$

dans laquelle M est $M'_{1-k}A_k$, M' est $Ni_{1-a-b}(Ni_{1/2}Mn_{1/2})_aCo_b$, $0,65 \leq a + b \leq 0,85$, et $0,1 \leq b \leq 0,4$,
A représente un dopant,

$$0 \leq k \leq 0,05,$$

$$0,05 \leq x \leq 1,05,$$

$$x + y \approx 2,$$

et

$$0 \leq z \leq 0,05.$$

**2.** Electrode positive suivant la revendication 1, dans laquelle la matière conductrice est incorporée en une quantité de 1 à 3 % en poids sur la base de la somme des poids de la matière active positive, de la matière conductrice et du liant.

**3.** Electrode positive suivant la revendication 1 ou 2, dans laquelle le liant comprend du poly(fluor de vinylidène).

**4.** Electrode positive suivant l'une quelconque des revendications 1 à 3, dans laquelle la matière conductrice comprend une matière choisie dans le groupe consistant en une matière à base de carbone, une matière à base de métal, un polymère conducteur et leurs mélanges.

**5.** Electrode positive suivant la revendication 4, dans laquelle :

la matière à base de carbone est choisie dans le groupe consistant en le graphite naturel, le graphite synthétique, le noir de carbone, le noir d'acétylène, le noir ketjen et la fibre de carbone,
la matière à base d'un métal est une poudre ou fibre de métal choisi dans le groupe consistant en le cuivre, le nickel, l'aluminium et l'argent, et
le polymère conducteur est un dérivé de polyphénylène.

**6.** Batterie au lithium rechargeable comprenant :

une électrode négative ;
un électrolyte non aqueux ; et
une électrode positive suivant l'une quelconque des revendications 1 à 4.

**7.** Batterie au lithium rechargeable suivant la revendication 6, dans laquelle la matière active négative comprend en outre :

un métal, alliage ou oxyde choisi dans le groupe consistant en le lithium métallique, un alliage lithium-métal, une matière dopée avec du lithium, et un oxyde de métal de transition ;
une matière carbonée est choisie dans le groupe consistant en le carbone cristallin, le carbone amorphe et un de leurs mélanges ;

un liant de matière active négative ; et
une matière conductrice de matière active négative.

**8.** Batterie au lithium rechargeable suivant la revendication 7, dans laquelle
l'alliage lithium-métal comprend du lithium combiné avec un métal choisi dans le groupe consistant en Na, K, Rb, Cs, Be, Mg, Ca, Sr, Si, Sb, Pb, In, Zn, Ba, Ge, Al et Sn,
la matière dopée avec du lithium est choisie dans le groupe consistant en un métal, composé ou alliage de silicium Si et d'un métal, composé ou alliage d'étain Sn,
le composé, métal ou alliage de Si est choisi dans le groupe consistant en Si, $SiO_x$, dans lequel $0 < x < 2$, un alliage Si-Q, dans lequel Q représente un élément choisi dans le groupe consistant en un métal alcalin, un métal alcalino-terreux, un élément du Groupe 13 IUPAc, un élément du Groupe 14 (groupe IVA), un élément de transition, un élément faisant partie des terres rares et leurs combinaisons,
le métal, composé ou alliage de Sn est choisi dans le groupe consistant en Sn, $SnO_2$, un alliage Sn-R, dans lequel R représente un élément choisi dans le groupe consistant en métal alcalin, un métal alcalino-terreux, un élément du Groupe 13, un élément du Groupe 14, un élément de transition, un élément faisant partie des terres rares et leurs combinaisons,
Q et R sont des éléments choisis dans le groupe consistant en Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Cua, Zn, Cd, B, Al, Ga, Sn, In, Ti, Ge, P, As, Sb, Bi, S, Se, Te et leurs combinaisons, et
l'oxyde de métal de transition est choisi deans le groupe consistant en l'oxyde de vanadium et l'oxyde de lithium-vanadium.

**9.** Batterie au lithium rechargeable suivant la revendication 7 ou 8, dans laquelle le liant de matière active négative est au moins un polymère choisi dans le groupe consistant en l'alcool polyvinylique, la carboxy-méthylcellulose, l'hydroxypropylcellulose, le chlorure de polyvinyle, le poly(chlorure de vinyle) carboxylé, le poly(fluorure de vinyle), un polymère contenant de l'oxyde d'éthylène, la polyvinylpyrrolidone, le polyuréthanne, le polytétrafluoréthylène, le poly(fluorure de vinylidène), un polyéthylène, un polypropylène, un caoutchouc styrène-butadiène, un caoutchouc styrène-butadiène acrylaté, une résine époxy et un Nylon, et
la matière conductrice de matière active négative est une matière choisie dans le groupe consistant en une matière à base de carbone, une matière à base de métal, un polymère conducteur et leurs mélanges.

**10.** Batterie au lithium rechargeable suivant l'une quelconque des revendications 6 à 9, dans laquelle l'électrolyte non aqueux comprend en outre un solvant organique non aqueux et un sel de lithium.

**11.** Batterie au lithium rechargeable suivant la revendication 10, dans laquelle le sel de lithium est choisi dans le groupe consistant en $LiPF_6$, $LiBF_4$, $LiSbF_6$, $LiAsF_6$, $LiN(SO_2C_2F_5)_2$, $Li(CF_3SO_2)_2N$, $LiN(SO_2C_2F_5)_2$, $LiC_4F_9SO_3$, $LiClO_4$, $LiAlO_2$, $LiAlCl_4$, LiN $(C_xF2_{x+1}SO_2)$ $(C_yF_{2y+1}SO_2)$, dans lequel x et y représentent des nombres entiers, LiCl, LiI et $LiB(C_2O_4)_2$, le bisoxalate-borate de lithium, LiBOB.

**12.** Batterie au lithium rechargeable suivant la revendication 10 ou 11, dans laquelle la plage de concentration du sel de lithium va de 0,1 M à 2,0 M.

FIG. 1

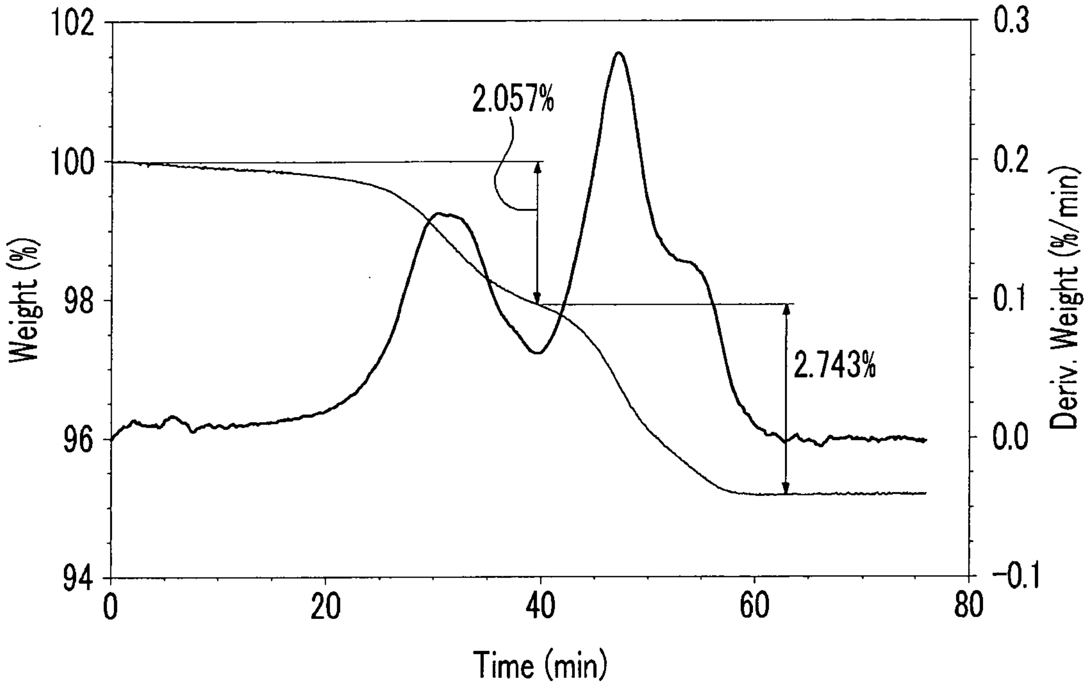
102
100
98
96
94
Weight (%)
0.3
0.2
0.1
0.0
-0.1
Deriv. Weight (%/min)
0
20
40
60
80
Time (min)
2.057%
2.743%

FIG. 2

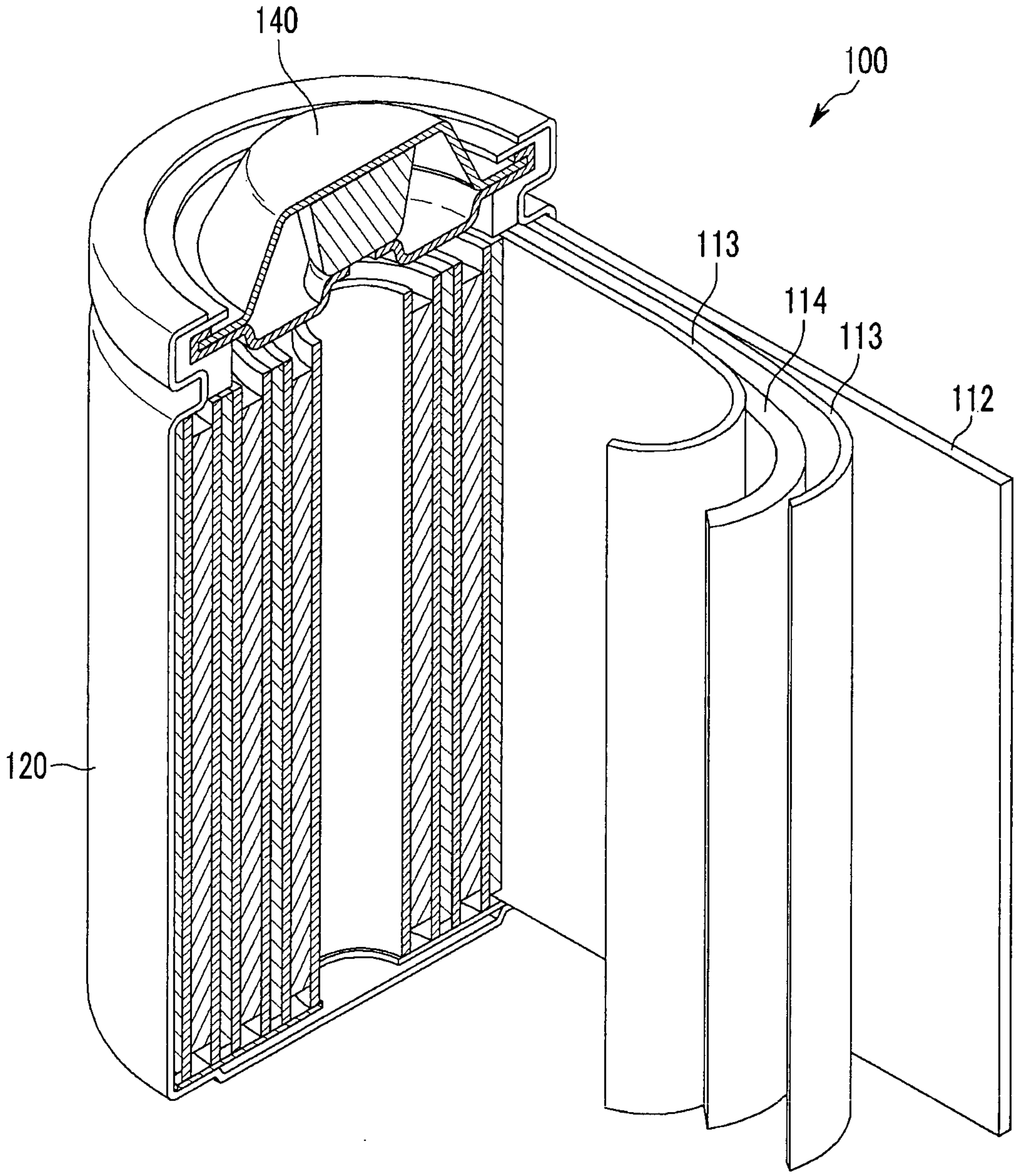

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009060603 A
- US 6416902 B
- US 2003180617 A
- US 2004072073 A
- US 2008299457 A
- JP 2006107845 B